# EUROPÄISCHE PATENTSCHRIFT

(11) **EP 0 807 887 B1**
(45) Veröffentlichungstag und Bekanntmachung des Hinweises auf die Patenterteilung: **09.11.2005**
(21) Anmeldenummer: 97107341.6
(22) Anmeldetag: 03.05.1997
(51) Int. Cl.: G06F 13/37, G05B 9/02

(54) **Verfahren zum Adressieren einer Anzahl peripherer Module von der Zentraleinheit in einem BUS-Leitungssystem**
Method of addressing a number of peripheral modules by the central unit in a bus system
Méthode d'adressage de plusieurs modules périphériques par une unité centrale dans une système de bus

(30) Priorität: 11.05.1996 DE 19619117
(43) Veröffentlichungstag der Anmeldung: 19.11.1997
(73) Patentinhaber: Conti Temic microelectronic GmbH, 90411 Nürnberg (DE)
(72) Erfinder: Fendt, Günter, 86529 Schrobenhausen (DE)

(56) Entgegenhaltungen:
- EP-A- 0 421 471
- DE-A- 3 736 081
- DE-A- 4 428 502
- PATENT ABSTRACTS OF JAPAN vol. 015, no. 356 (P-1249), 9. September 1991 (1991-09-09) & JP 03 136157 A (BROTHER IND LTD), 10. Juni 1991 (1991-06-10)
- PATENT ABSTRACTS OF JAPAN vol. 012, no. 328 (E-654), 6. September 1988 (1988-09-06) & JP 63 090929 A (OMRON TATEISI ELECTRONICS CO), 21. April 1988 (1988-04-21)

## Beschreibung

Die Erfindung betrifft ein Verfahren zum Adressieren einer Anzahl peripherer Module von einer Zentraleinheit in einem BUS-Leitungssystem gemäß dem Oberbegriff des Patentanspruchs 1.

Derartige Verfahren werden bereits in der Praxis eingesetzt, wie bspw. in Motorola Semiconductor Application Note AN475/D (Burri/Renard: Single wire MI BUS controlling stepper motors, MOTOROLA 1993) zu entnehmen. Dabei werden die peripheren Module einzeln vor dem Zusammenbau in das BUS-Leitungssystem adressiert, so daß die Zentraleinheit dann auf die einzelnen Module zugreifen kann. Dies führt zu einem hohen logistischen Aufwand, da bspw. bautechnische Gleichteile am Montageband getrennt entsprechend der Adressierung gehandhabt und bevorratet werden müssen.

Sollen bspw. in Kraftfahrzeugen, bei denen eine Vielzahl von Insassenschützenden Einrichtungen, wie zum Beispiel Airbags, Gurtstraffer und dergleichen vorgesehen sind, diese von einem zentralen Steuergerät angesteuert und ausgelöst werden, ist es erforderlich, daß das zentrale Steuergerät eine der Anzahl der personenschützenden Mittel entsprechende Anzahl von Endstufen aufweist. Mit dem steigenden Bedürfnis nach mehr Sicherheit im Kraftfahrzeug werden neben dem Fahrerairbag, dem Beifahrerairbag, Gurtstraffern, überrollbügeln weitere Schutzeinrichtungen, wie beispielsweise Seitenairbags und dergleichen, gewünscht, für die zusätzliche Endstufen im zentralen Steuergerät erforderlich sind. Da infolge einer immer größeren Anzahl erforderlicher Endstufen die elektronische Schaltung des Steuergeräts immer größer wird, lassen sich derartige Schaltungen in einem Standardgehäuse eines zentralen Steuergeräts nicht mehr unterbringen. Es ist daher vorgesehen, Sicherheitssysteme für Kraftfahrzeuge mit dezentralen Steuersystemen zu realisieren. Hierbei werden die Endstufen, zum Beispiel die Endstufen zur Auslösung eines Airbags oder eines Gurtstraffers direkt am Ort des Airbags oder des Gurtstraffers als peripheres Modul des Steuersystems angeordnet. Die zentrale Steuereinheit des Steuersystems für ein derartiges Sicherheitssystem erfaßt und verarbeitet dabei von einem oder mehreren Beschleunigungsaufnehmern zugeführte Beschleunigungssignale, um im Falle eines gefährlichen Unfalls die entsprechenden Auslösesignale zu den einzelnen als periphere Module ausgebildeten Endstufen des Sicherheitssystems zu senden, so daß die einzelnen personenschützenden Mittel betätigt werden. Hierbei besteht nun die Möglichkeit, jede als peripheres Modul angeordnete Endstufe für ein personenschützendes Mittel einzeln mit der zentralen Steuereinheit des Steuersystems zu verbinden. Dies erfordert jedoch eine aufwendige Verkabelung sowie eine entsprechende Anzahl von Ausgängen der zentralen Steuereinheit des Steuersystems.

Die Sicherheitssysteme in Kraftfahrzeugen bestehen aus einer Vielzahl von Gleichteilen, die aber individuell angesteuert werden sollen. So sind rechte wie linke Gurtstraffer identisch und auch die Endstufenmodule der Airbagsysteme werden vereinheitlicht. Die Module sollen aber individuell angesteuert werden können, um bspw. auf die Sitzbelegung im Fahrzeug, die Unfallschwere oder ähnliches gezielt reagieren zu können. Werden diese Gleichteile nun aber vor der Endmontage individuell adressiert, so müssen sie im folgenden getrennt gelagert und bevorratet werden. Da außerdem die Fahrzeuge unterschiedliche Ausstattungsmerkmale aufweisen, wird der logistische Aufwand sehr hoch, um zeitpunktgenau die richtigen, fahrzeugindividuellen Module am Montageband bereitzustellen.

Für die Ansteuerung von Schrittmotoren ist bereits ein Steuersystem bekannt (Burri/Renard: Single wire MI BUS controlling stepper motors, in: Motorola Semiconductor Application Note AN475/D, MOTOROLA 1993), bei dem eine Zentraleinheit (MCU) mit den einzelnen peripheren Motorsteuermodulen über einen Bus verbunden ist, der nur eine Eindrahtleitung aufweist. Der Bus kann dabei linien- oder ringförmig aufgebaut sein. Bei diesem Steuersystem ist zwar die Anzahl der Leitungsanschlüsse an der Zentraleinheit erheblich verringert, die Zuverlässigkeit des Bussystems reicht jedoch für sicherheitskritische Steuersysteme nicht aus, da bei einem Fehler der Busleitung, z. B. durch einen Masseschluß, der gesamte Bus ausfällt. Außerdem ist der Aufwand der individuellen Adressierung hoch, da die Module alle vorab einzeln adressiert werden müssen.

Aus DE-A1-3736081 ist ein Verfahren zur Adresseneinstellung von an einem Bus angeschlossenen Teilnehmern bekannt. Diese Teilnehmer sind über den Bus mit einer zentralen Verarbeitungseinheit verbunden. Die Teilnehmer sind über eine von der zentralen Verarbeitungseinheit ausgehende, gesonderte Steuerleitung in "Daisy-Chain-Verbindung" in Reihe geschaltet. Durch ein Signal mit einem bestimmten binären Wert auf der Steuerleitung nimmt ein Teilnehmer von einem in der zentralen Verarbeitungseinheit erzeugten Übertragungstelegramm auf dem Bus eine ihm zugewiesene Adresse auf. Zusätzlich wird ausgangsseitig die Steuerleitung mit dem bestimmten binären Wert beaufschlagt, so daß bei Wegfall des Signals mit dem bestimmten binären Wert am Eingang eines Teilnehmers die "Daisy-Chain-Verbindung" unterbrochen wird. Bei bestehender "Daisy-Chain-Verbindung" überträgt der jeweilige Teilnehmer die aufgenommene Adresse als Antwort auf einen Aufruf der zentralen Verarbeitungseinheit.

Außerdem sind aus der DE 40 12 544 A1 und DE 43 08 568 A1 Verfahren zur automatischen Adressierung von peripheren Modulen in BUS-Leitungssystemen bekannt, bei denen die Module jeweils individuell einen Zufallszahl als Adresse erzeugen, diese an die Zentraleinheit melden und dann ein Abgleichprozeß zu einer für alle Moduel zulässigen Adressierung führt. Ebenfalls die Erfindungen gemäß der EP 0 265 575 A1, der US 0074,868, der US 4,847,834 oder US 4,689,786 basieren auf einer automatischen Adressierung per Zufallszahlenerzeugung.

Nachteil dieser Verfahren ist der hohe Verfahrens- und Hardwareaufwand, da einerseits entsprechende Zufallszahlengeneratoren vorgesehen werden müssen, andererseits immer ein Abgleich auf eine erste zulässige Adressierung erforderlich ist.

Davon ausgehend liegt der Erfindung die Aufgabe zugrunde, ein neues Verfahren zum Adressieren von peripheren Modulen von einer Zentraleinheit aus in einem BUS-Leitungssystem bereitzustellen.

Diese Aufgabe ist durch die kennzeichnenden Merkmale des Patentanspruchs 1 in überraschend einfacher weise gelöst, indem in einer vorgegebenen Reihenfolge in alle Äste und/oder Ringe der BUS-Leitungssystemstruktur Adressierungsbefehle mit einer jeweils noch nicht vergebenen Adresse gesandt werden und alle adressierten Module diese weiterleiten, während das in der Reihenfolge nächstliegende, noch nicht adressierte Modul die mitgesendete Adresse übernimmt und die Weiterleitung verhindert. Dieses Grundkonzept der Erfindung ist generell anwendbar für BUS-Leitungssysteme beliebiger Struktur, also insbesondere für ein- oder mehradrige sowie ast- oder ringförmige Anordnungen mehrerer Module und natürlich beliebigen Kombinationen aus diesen. Zwar treten gerade im Bereich der Sicherheitsssysteme für Kraftfahrzeuge die beschriebenen technisch identischen Module mit individueller Adressierung und unterschiedlichen Ausführungsvarianten von Endprodukten auf, das Verfahren ist jedoch nicht darauf beschränkt zu betrachten, sonden vielmehr für eine Vielzahl von Adressierungsaufgaben von peripheren Modulen in BUS-Leitungssystemen geeignet. Wesentliche Vorteile aus dem erfinderischen Verfahren treten immer dann auf, wenn eine große Anzahl von Gleichteilen in einem BUS-Leitungssystem individuell adressiert werden soll. Die vorliegende Erfindung beseitigt insbesondere das allgemein herrschende Vorurteil, daß für derartige Adressierungsaufgaben die eingangs beschriebenen komplexen Verfahren auf Basis von Zufallszahlen erforderlich sind. Statt diese Verfahren weiterzuentwickeln, wählt die Erfindung einen anderen, viel einfacheren Ansatz.

Vorteilhafte Weiterbildungen der Erfindung beschreiben die Patentansprüche 2 bis 8.

So ist es besonders vorteilhaft, wenn der Zentraleinheit vor Beginn der Adressierung die Struktur des BUS-Leitungssystems mitgeteilt wird. Dies kann bspw. am Montagebandende durch eine Übergabe der individuellen Fahrzeugausstattungsdaten über eine Programmierschnittstelle erfolgen. Bspw. wird auch nur die maximal mögliche Verteilung von Modulen vorgegeben, wodurch ebenfalls alle Moduel dann adressiert werden, einzelne Adressen der Adressmenge jedoch nicht belegt sind.

Dadurch kann die Zentraleinheit sehr einfach und ohne zusätzliche Mittel der Prüfung der Anzahl von adressierten Modulen agieren. Entsprechende Mittel, bspw. Rückantwortdefinitionen oder eine Auswertung des Ring- oder Astendes sind grundlegend bekannt.

Besonders vorteilhaft ist es jedoch, das erfindungsgemäße Verfahren derart auszubilden, daß das neu adressierte Modul eine Rückantwort an die Zentraleinheit sendet, denn dadurch lassen sich die in den Patentansprüchen 4 und 5 beschriebenen Verfahrensschritte realisieren, wonach eine ausgesandte Adresse erst dann als vergeben registriert wird, wenn sie von einem Modul durch Rückantwort bestätigt wird. Im Normalfall müßte die Adresse bereits beim Aussenden gesperrt werden, unabhängig, ob in dem gerade aktuellen Ast oder Ring noch ein unadressierten Modul ist. Durch die Rückantwort kann auch gemäß Patentanspruch 5 das vollständige Adressieren eines Astes oder Ringes daran erkannt werden, das dann auf einen Adressierungsbefehl keine Rückantwort mehr erfolgen kann. Folglich kann die ausgesandte Adresse nochmals für einen noch nicht adressierten Ast oder Ring genutzt werden und es gehen keine Adressmengen aufgrund von bspw. pauschalen Zuordnungen zu Ästen oder Ringen verloren.

Patentanspruch 6 beschreibt eine besonders bevorzugte Ausgestaltung der Erfindung, indem die Zentraleinheit über eine Folge von Adressen und einen entsprechenden Zähler verfügt. Der niedrigsten Zählwert wird dabei als Einheits- bzw. Default-Adresse allen Modulen bspw. bei der Produktion dieser gleich vergeben, bis eine individuelle Adressierung erfolgt. Durch Erhöhung des Zählwertes jeweils um einen Schritt wird automatisch immer die nächsthöhere freie Adresse ausgesendet, so daß aufwendigere Registriermittel für die bereits vergebenen Adressen entfallen können. Generell ist die Einhaltung einer strikten Reihenfolge der Adressenvergabe zwar sinnvoll, jedoch nicht zwingend erforderlich.

Wird dabei ein bestimmter, bspw. der höchste Zählwert nicht vergeben, können mit diesem alle Module auf einmal angesprochen werden, was insbesondere in einem besonders kritischen Zustand, wie einem Unfall eines Fahrzeuges mit hoher Geschwindigkeit die Zeit zum Ansprechen aller Module entscheidend verkürzt. Außerdem ist dies sehr einfach realisierbar, bspw. über das höchstsignifikante Bit einer Adressbitfolge, welches zu diesem Zweck reserviert ist.

Die Verwendung des erfinderischen Konzepts ist gemäß Patentanspruch 8 auch zum nachträglichen Adressieren eventuell hinzugefügter Module verwendbar, da, wie bereits oben beschrieben, die bereits adressierten Module von dem Adressierungsbefehl unbeeinflußt bleiben und diesen an das unadressierte Modul weiterleiten. wichtig ist dabei, daß ein entsprechender Befehl an die Zentraleinheit ergeht.

Gemäß Patentanspruch 9 weisen die Module Mittel zum Durchführen des erfindungsgemäßen Verfahrens auf, könnte insbesondere entsprechend dem eigenen Adressierungszustand die Weiterleitung des Adressierungsbefehls verhindern.

Die Erfindung wird nachfolgend anhand von Ausführungsbeispielen und Figuren näher erläutert.

Kurze Beschreibung der Figuren:
- Figur 1: Visualisierung des Adressierungsablaufs in einem neu zu adressierenden Leitungsast
- Figur 2: Adressierung eines nachträglich hinzugefügten Moduls
- Figur 3: adressierter Leitungsring

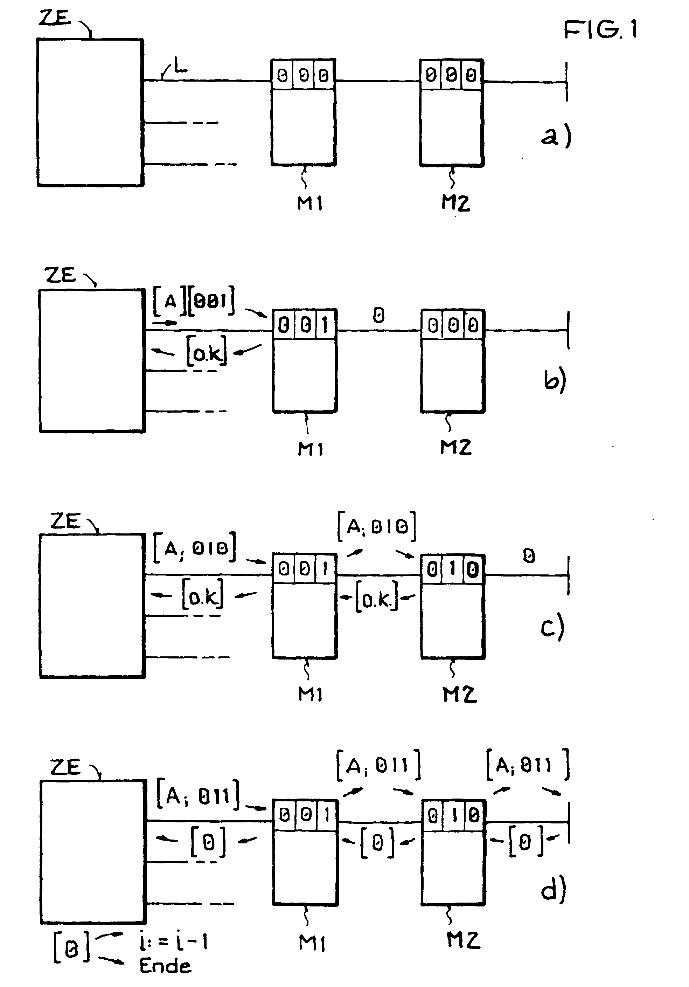

Figur 1 visualisert den Adressierungsablauf der peripheren Module M1 und M2 in einem neu zu adressierenden Ast L von der Zentraleinheit ZE aus. Dieses Ausführungsbeispiel zeigt den einfachsten Fall einer BUS-Leitungsstruktur, welche jedoch durch beliebig viele Module, Äste und/oder Ringe erweitert werden kann. Da die Zentraleinheit zwangsläufig für jeden getrennten Ast oder Ring einen eigenen Anschluß (I/O-Port) braucht, muß der Zentraleinheit nur die maximal mögliche Anzahl von Modulen je Ast oder Ring bekannt sein. Dies ist aber praktisch jederzeit dadurch gewährbar, daß bei Überschreitung der maximalen Anzahl dann entsprechend ein Ast oder Ring ergänzt werden muß. Besonders vorteilhaft ist natürlich, wenn der zentraleinheit vor Beginn der Adressierung die exakte Struktur des BUS-Leitungssystems mitgeteilt wird. Dies kann bspw. am Montagebandende durch eine Übergabe der individuellen Fahrzeugausstattungsdaten über eine Programmierschnittstelle erfolgen. Dadurch werden nur die Anzahl an Adressierungsbefehlen ausgesandt, die auch in dem jeweiligen Ast oder Ring benötigt werden. Sonst wechselt die Zentraleinheit zum nächsten Anschluß (I/O-Port) und sendet den für diesen die maximal zulässigen Adressen. Eine andere Möglichkeit besteht durch die Definition einer Rückantwort, wie sie im folgenden beschrieben und in Figur 1 gezeigt wird.

Ausgehend von der Zentraleinheit ZE sind die Module M1 und M2 über die Leitung L verbunden. Die Module M1 und M2 sind beide defaultmäßig auf die Einheitsadresse [000] gesetzt. Jedes Modul weist dabei zwei Leitungsabschnitte auf, entweder zur Zentraleinheit beim ersten Modul M1, zu den benachbarten Modulen oder zum offenen oder Ringende, wie dies beim zweiten Modul dargestellt ist.

Im Schritt a) sendet die Zentraleinheit ZE den Adressierungsbefehl A mit dem ersten Adressierungsdatenwort [001] in die Leitung L, wo sie vom ersten Modul M1 empfangen wird. Da M1 bisher nicht adressiert war, übernimmt M1 nunmehr die Adresse [001] leitet den Adressierungsbefehl nicht weiter, wie dies durch [0] im nachfolgenden Leitungsabschnitt dargestellt wird und sendet eine Rückantwort [o.k.] zurück.

Im Schritt b) sendet die Zentraleinheit nun ihr zweites Adressierungsdatenwort [010], welches durch einen um Eins inkrementierten Zähler erzeugt wurde. Generell ist die Einhaltung einer strikten Reihenfolge der Adressenvergabe zwar sinnvoll, jedoch nicht zwingend erforderlich. Diesmal ist Modul M1 bereits adressiert und leitet den Adressierungsbefehl nunmehr weiter zu dem zweiten Modul M2. Da dies bisher unadressiert war, übernimmt es jetzt das zweite Adressierungsdatenwort, wie durch Veränderung des Adressspeicherinhalts visualisiert. Folglich wird der Adressierungsbefehl nicht weitergeleitet und eine Rückantwort [o.k.] zur Zentraleinheit ZE zurückgesandt.

Im Schritt c) sendet die Zentraleinheit ZE das Adressierungsdatenwort [011], was jedoch nunmehr sowohl von Modul M1 als auch von Modul M2 weitergeleitet wird. Das Weiterleiten kann dabei sowohl ein passives Freigeben einer schaltbaren direkten Verbindung der entsprechenden Leitungsabschnitte sein, aber auch aktiv durch Zwischenverstärkung und Weitersenden mittels aktiver Sendeeinrichtungen erfolgen. Dadurch kann auch auf einfache Weise die Weiterleitung des Adressierungsbefehls von einem bisher unadressierten Modul verhindert werden, indem es diesen Befehl nicht mehr verstärkt oder sendet. Anderenfalls sind entsprechende Schaltmittel zur Unterdrückung der Weiterleitung vorzusehen, welche nach der Adressierung auf Durchgang gesetzt werden.

Da das Modul M2 das letzte Modul im Ast L ist, erfolgt keine Rückantwort [o.k.], es wird kein Signal rückgesandt. Dies wird durch [0] visualisert. Daraufhin erkennt die Zentraleinheit ZE, daß alle Module im Ast L adressiert sind und kann nunmehr gegebenenfalls einen weiteren Ast oder Ring adressieren und dabei die Adresse nochmals verwenden, oder beendet die Adressierung (Ende).

Generell könnte durch gezieltes Ansprechen bestimmter Moduladressen geprüft werden, ob noch ein Modul entsprechend adressiert wurde und nunmehr der Zentraleinheit antwortet.

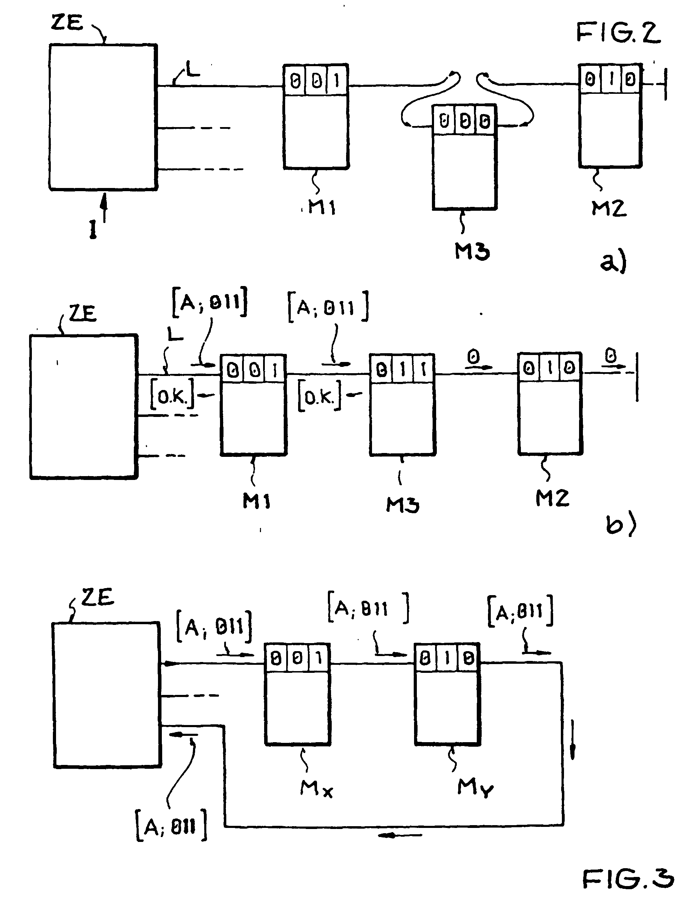

In Figur 2 wird nun noch gezeigt, wie ein neu in ein bereits adressiertes BUS-Leitungssystem eingefügtes Modul M3 mit dem erfindungsgemäßen Verfahren adressiert wird. Das Modul M3 ist wie alle unadressierten Module zuvor mit [000] belegt, und wird zwischen Modul M1 und Modul M2 nun in Schritt a) eingefügt. Im Schritt b) erhält nun die Zentraleinheit die Information (I), daß ein neues Modul eingefügt wurde und löst einen Adressierungsbefehl mit der nächstfreien Adresse [011] aus. Diese wid nunmehr von Modul M3 übernommen, nicht weitergeleitet und die Rückantwort [o.k.] an die Zentraleinheit gesandt. Gegebenfalls prüft die Zentraleinheit über einen weiteren Adressierungsversuch, wie In Figur 1c) bereits dargestellt, die vollständige Adressierung aller Module.

Die Anzahl der zur Verfügung stehenden Adressen ist in diesem Ausführungsbeispiel jetzt erschöpft, falls das höchstsignifikante Bit für das Aktivieren aller Module gleichzeitig per Notfallbefehl [1xx] freigehalten werden soll. Es ist also sinnvoll, die Menge möglicher Adressen nicht zu klein zu wählen, um eine Reserve für das nachträgliche Einfügen von Modulen zu haben.

Figur 3 verdeutlicht, daß das beschriebene Adressierungsverfahren auch für Ringstrukturen anwendbar ist, wobei hier sich mehrere Möglichkeiten der Rückantwort an die Zentraleinheit ergeben, je nach Definition der Übertragungswege als mono- oder bidirektionale. So kann die Zentraleinheit neben dem bereits bei Astleitungen in Fig.1 und 2 gezeigten und oben beschriebenen Variante der [o.k.]-Rückantwort auch durch den Empfang des unverarbeiteten Adressierungsbefehls (vgl. Fig. 3) erkennen, daß alle Module adressiert sind, da alle Module den Adressierungsbefehl weitergeleitet haben.

Nach dem individuellen Adressieren können gegebenenfalls nunmehr die einzelnen Module bestimmte Erkennungszeichen an die Zentraleinheit senden, wodurch deren technischer Charakter erkannt wird.

## Patentansprüche

1. Verfahren zum Adressieren einer Anzahl n (n >1) von peripheren Modulen von einer Zentraleinheit in einem BUS-Leitungssystem, insbesondere für Sicherheitssysteme in einem Kraftfahrzeug, welches eine Struktur aus einem oder mehreren Ästen und/oder Ringen aufweist, wobei
a) die Zentraleinheit über eine Menge von Adressen verfügt, die wenigstens der Anzahl von Modulen entspricht,
b) die Zentraleinheit nach einer vorgegebenen Reihenfolge nacheinander in jeden Ast oder Ring zunächst einen vorgegebenen Adressierungsbefehl sendet, und
c) von der Zentraleinheit mit dem Adressierungsbefehl ein Adressierungsdatenwort ausgesendet wird,
**dadurch gekennzeichnet, daß**
d) die Module,
d1) falls ihnen bereits eine individuelle Adresse zugewiesen wurde, einen empfangenen Adressierungsbefehl und ein zugehöriges Adressierungsdatenwort an möglicherweise nachfolgende Module weiterleiten,
d2) falls ihnen noch keine individuelle Adresse zugewiesen wurde, nach einen empfangenen Adressierungsbefehl das zugehöriges Adressierungsdatenwort als individuelle Adresse gespeichert wird und die Weiterleitung an möglicherweise nachfolgende Module gezielt verhindert wird,
e) der Prozeß gemäß der Schritte b bis d dann für die nächsten Module, gegebenenfalls im nächsten Ast oder Ring, entsprechend der vorgegebenen Reihenfolge mit einer jeweils noch nicht vergebenen Adresse fortsetzt wird, bis alle Module adressiert sind.

2. Verfahren zum Adressieren nach Anspruch 1,
**dadurch gekennzeichnet, daß**
der Zentraleinheit vor Beginn der Adressierung die Struktur des BUS-Leitungssystems, also die Anzahl der Äste und/oder Ringe sowie die Anzahl der Module in ihnen jeweils mitgeteilt wird.

3. Verfahren zum Adressieren nach Anspruch 1 oder 2,
**dadurch gekennzeichnet, daß**
das neu adressierte Modul eine Rückantwort an die Zentraleinheit sendet.

4. Verfahren zum Adressieren nach Anspruch 3,
**dadurch gekennzeichnet, daß**
die ausgesandte Adresse als vergeben registriert wird, wenn die Rückantwort vom Modul gesendet wird.

5. Verfahren zum Adressieren nach Anspruch 3 oder 4,
**dadurch gekennzeichnet, daß**
die Zentraleinheit in einen Ast oder Ring so lange einen neuen Adressierungsbefehl und ein noch nicht vergebenes Adressierungsdatenwort sendet, bis darauf keine Rückantwort mehr erfolgt, und dann zum nächsten Ast oder Ring übergeht, bis alle Module adressiert sind.

6. Verfahren zum Adressieren nach einem der vorangehenden Ansprüche,
**dadurch gekennzeichnet, daß**
die Zentraleinheit über eine Folge von Adressen, vorzugsweise eine binäre numerische Reihe, und einen entsprechenden Zähler verfügt,
- deren niedrigster Zählwert als Einheitsadresse allen Modulen bereits vor der individuellen Adressierung zugewiesen ist,
- die Zentraleinheit den Zählwert vor jedem Adressierungsschritt um Eins erhöht, so dass als nächste Adresse immer die nächsthöhere Adresse aussendet wird, so daß aus dem aktuellen Stand des Zählers die bisher vergebenen bzw. noch freien Adressen abgeleitet werden können.

7. Verfahren zum Adressieren nach Anspruch 6,
**dadurch gekennzeichnet, daß**
ein bestimmter Zählwert, vorzugsweise der höchste Zählwert, nicht an ein Modul vergeben wird, sondern alle Module gemeinsam von dieser Adresse angesprochen werden können.

8. Verwendung des Verfahren zum Adressieren nach einem der vorangehenden Ansprüche auch zum Adressieren eines nachträglich neu hinzugekommenen Moduls, sofern die Menge der Adressen entsprechend groß gewählt ist, indem die Zentraleinheit aufgefordert wird, nochmals einen Adressierungsbefehl und ein Adressierungsdatenwort in das BUS-Leitungssystem zu senden.

9. Periphere Module zum Durchführen eines Verfahrens nach einem der vorangehenden Ansprüche, indem jedes Modul in der Lage ist, entsprechend der vorhandenen oder nicht vorhandenen individuellen Adressierung empfangene Adressierungsbefehle und Adressierungsdatenworte weiterzuleiten oder, falls ein Modul noch nicht adressiert ist, auf den Adressierungsbefehl hin die Adresse anzunehmen und die Weiterleitung des Adressierungsbefehls zu unterdrücken.

## Claims

1. A procedure for addressing a number n (n > 1) of peripheral modules of a central unit in a BUS control system, in particular for safety systems in a motor vehicle, which comprises a structure of one or more branches and/or rings, wherein
a) the central unit has a quantity of addresses which corresponds at least to the number of modules,
b) the central unit initially transmits one specified address command in a specified sequence in succession in each branch or ring, and
c) an address data word is transmitted from the central unit with the address command,
**characterised in that**
d) the modules
d1) if they have already been allocated an individual address, forward a received address command and a related address data word to potential subsequent modules,
d2) if they have not yet been allocated an individual address, the related data word is stored as an individual address when an address command is received, and any forwarding to a potential subsequent module is deliberately prevented,
e) the process according to stages b to d is then continued for the next modules, and if appropriate for the next branch or ring, in accordance with the specified sequence with one address which has not yet been assigned in each case, until all modules have been addressed.

2. A procedure for addressing according to claim 1,
**characterised in that**
the central unit is informed before addressing begins of the structure of the BUS control system, i.e. the branches and/or rings, and the number of modules in them in each case.

3. A procedure for addressing according to claim 1 or 2,
**characterised in that**
the newly addressed module transmits a response to the central unit.

4. A procedure for addressing according to claim 3,
**characterised in that**
the transmitted address is registered as having been assigned when the response is transmitted from the module.

5. A procedure for addressing according to claim 3 or 4,
**characterised in that**
the central unit transmits a new address command and an address data word which has not yet been assigned into a branch or ring until no further response is given, and then moves on to the next branch or ring, until all modules have been addressed.

6. A procedure for addressing according to one of the aforementioned claims,
**characterised in that**
the central unit has a sequence of addresses, preferably a binary, numerical series, and an appropriate counter
- the lowest counter value of which has already been allocated to all modules as a uniform address before the individual addressing,
- the central unit increases the counter value by one before each addressing stage, so that the next highest address is always transmitted as the subsequent address, with the result that the current status of the counter shows addresses which have not yet been assigned, and addresses are still free.

7. A procedure for addressing according to claim 6,
**characterised in that**
a specific counter value, preferably the highest counter value, is not assigned to a module, but all modules can be contacted together from this address.

8. The procedure for addressing according to one of the aforementioned claims is also used for addressing a module which has just been added retrospectively, insofar as the quantity of the addresses selected is sufficiently large, wherein the central unit is again requested to re-transmit an address command and an address data word into the BUS control system.

9. Peripheral modules for implementing a procedure according to one of the aforementioned claims, wherein each module is capable of forwarding address commands and address data words received according to the individual addressing available or not yet available, or, if a module has not yet been addressed, of receiving the address from the address command, and of suppressing the forwarding of the address command.

## Revendications

1. Procédé pour adresser un nombre n (n>1) de modules périphériques à partir d'une unité centrale dans un système de bus, en particulier pour les systèmes de sécurité dans un véhicule, lequel présente une structure se composant d'une ou plusieurs branches et/ou d'un ou plusieurs anneaux, où
a) l'unité centrale dispose d'une quantité d'adresses qui correspond au minimum au nombre des modules,
b) l'unité centrale envoie d'abord, dans un ordre spécifié à l'avance, une instruction d'adressage spécifiée à l'avance successivement dans chaque branche ou anneau, et
c) un mot de données d'adressage est envoyé de l'unité centrale avec l'instruction d'adressage.
**caractérisé en ce que**
d) les modules,
d1) si une adresse individuelle leur déjà a été attribuée, redirigent une instruction d'adressage reçue et un mot de données d'adressage correspondant à d'éventuels modules suivants,
d2) si aucune adresse individuelle ne leur a encore été adressée, le mot de données d'adressage correspondant est sauvegardé comme adresse individuelle suivant une instruction d'adressage reçue et la redirection à d'éventuels modules suivants est empêchée de façon ciblée,
e) le processus se poursuit ensuite pour les modules suivants conformément aux étapes b à d, le cas échéant dans la branche ou l'anneau suivant, selon l'ordre spécifié à l'avance, à chaque fois avec une adresse non encore attribuée, jusqu'à ce que tous les modules soient adressés.

2. Procédé d'adressage selon la revendication 1,
**caractérisé en ce que**
la structure du système de bus, c'est-à-dire le nombre des branches et/ou anneaux ainsi que le nombre des modules s'y trouvant, est communiqué à chaque fois à l'unité centrale avant l'adressage.

3. Procédé d'adressage selon les revendications 1 ou 2,
**caractérisé en ce que**
le module nouvellement adressé envoie une confirmation à l'unité centrale.

4. Procédé d'adressage selon la revendication 3,
**caractérisé en ce que**
l'adresse envoyée est enregistrée comme attribuée lorsque la confirmation du module est envoyée.

5. Procédé d'adressage selon les revendications 3 ou 4,
**caractérisé en ce que**
l'unité centrale envoie une nouvelle instruction d'adressage et un mot de données d'adressage encore non attribué dans une branche ou un anneau jusqu'à ce que plus aucune confirmation ne s'ensuive, et passe ensuite à la branche ou à l'anneau suivant jusqu'à ce que tous les modules soient adressés.

6. Procédé d'adressage selon l'une des revendications précédentes,
**caractérisé en ce que**
l'unité centrale dispose d'une suite d'adresses, de préférence une série binaire numérique, et d'un compteur correspondant,
- dont la plus petite valeur numérique est attribuée comme adresse d'unité à tous les modules, déjà avant l'adressage individuel,
- l'unité centrale incrémente la valeur numérique de 1 avant chaque étape d'adressage, afin que ce soit toujours l'adresse immédiatement supérieure qui soit envoyée, afin que les adresses attribuées jusqu'ici ou les adresses encore libres soient déduites de la position courante du compteur.

7. Procédé d'adressage selon la revendication 6,
**caractérisé en ce qu'**
une valeur numérique déterminée, de préférence la valeur numérique la plus élevée, n'est pas attribuée à un module, mais que tous les modules peuvent être contactés ensemble à partir de cette adresse.

8. Utilisation du procédé pour l'adressage selon l'une des revendications précédentes également pour l'adressage d'un module nouvellement ajouté, dans la mesure où le nombre des adresses est choisi de façon à avoir une valeur correspondante élevée, tel qu'il est demandé à l'unité centrale d'envoyer encore une fois une instruction d'adressage et un mot de données d'adressage dans le système de bus.

9. Modules périphériques pour l'exécution d'un procédé selon l'une des revendications précédentes, tel que chaque module est en mesure de rediriger les instructions d'adressage et les mots de données d'adressage reçus d'une façon correspondant à l'adressage individuel existant ou non existant, ou bien, dans le cas où un module n'est pas encore adressé, d'accepter l'adresse suite à une instruction d'adressage et de supprimer la redirection de l'instruction d'adressage.
